# EUROPEAN PATENT SPECIFICATION

(11) **EP 1 915 076 B1**
(45) Date of publication and mention of the grant of the patent: **15.04.2009**
(21) Application number: 06795648.2
(22) Date of filing: 11.08.2006
(51) Int. Cl.: A47J 31/44

(54) **BEVERAGE BREWING DEVICES HAVING MOVABLE SPOUTS**
GETRÄNKEBRAUVORRICHTUNGEN MIT BEWEGLICHEN AUSGÜSSEN
DISPOSITIF DE BRASSAGE DE BOISSON POSSEDANT DES BECS VERSEURS AMOVIBLES

(30) Priority: 11.08.2005 US 707273 P
(43) Date of publication of application: 30.04.2008
(73) Proprietor: The Procter and Gamble Company, Cincinnati, Ohio 45202 (US)
(72) Inventor: COLMAN, Arne, Benjamin, Newark, Nottinghamshire N623 5S6 (GB); CURTIS, Terence, Graham, Flackwell Heath HP10 9AN (GB)
(74) Representative: Cabinet Plasseraud
(86) International application number: PCT/IB2006/052795
(87) International publication number: WO 2007/017851

(56) References cited:
- EP-A- 0 737 434
- DE-U1- 29 810 291

## Description

### FIELD OF THE INVENTION

The present invention generally rotates to brewing devices that comprise moveable spouts.

### BACKGROUND OF THE INVENTION

In response to consumer demand for faster, more convenient brewers, single-cup brewing devices have recently been introduced. In general, single-cup brewing devices differ from conventional brewing devices in that single-cup brewing devices can quickly provide one cup of brewed beverage at a time. Additionally, single-cup brewing devices differ from espresso brewers in that single-cup brewing devices may he capable of brewing more than just espresso. More specifically, single-cup brewing devices are often designed to work in conjunction with pre-packaged pods, pouches or cartridges containing brewing materials, and in particular, beverage brewing materials, such as coffee, tea and the like. In general, the consumer places u pod into the brewing device and in less than two minutes a single-serving of freshly brewed beverage is produced. An example of a device for dispensing hot beverages is disclosed in European patent application EP0737434A1. While the foregoing features of single-cup brewing devices can provide many benefits to consumers, issues may still arise.

For example, one issue with single-cup brewing devices is splattering. One possibly reason for splattering is that the rapid nature of the brew cycle of single-cup brewing devices may result in the coffee being dispensed at an increased speed compared to that of conventional brewing devices. Moreover, because of the increased speed, there is a greater chance that the flow rate of the coffee will not be uniform, which too may contribute to splattering.

Further affecting the degree of splattering is that single-cup brewing devices generally dispense the brewed beverage directly into the user's cup. As many consumers prefer to drink their coffee in a mug, which is traditionally short and wide, there may often be a substantial distance between the spout of the brewing device und the mug, leaving room for undesirable splatter. To avoid this, the consumer must hold the mug under the spout of the brewing device until the beverage is dispensed. This can be an inconvenient process for consumers.

Just its troublesome is the use of travel mugs, which allow consumers to take their beverages "to go." Travel mugs are generally tall and thin so as to fit into beverage receptacles in vehicles. This can present an issue as the spout of many single-cup brewing devices may be too low to accommodate such tall mugs. Thus, the consumer must first collect the brewed beverage in a traditional coffee mug and then pour it into the more desired travel mug, which again results in inconvenience for the consumer.

Another concern with single-cup brewing devices is that the dispensing spout is often embedded in the brewing device itself. Such a configuration makers it difficult, if not impossible, to remove the spout for cleaning, thereby increasing the likelihood that the spout may foster unwanted microbial growth.

Therefore, there remains a need for a brewing device having a moveable spout that may be conveniently and easily positioned to dispense a brewed beverage directly into a consumer's cup, regardless of the cup's shape or size, with minimal splattering. Moreover, removal of such spout for cleaning is desired.

### SUMMARY OF THE INVENTION

Embodiments of the present invention relate to a beverage brewing device comprising at least two dispensing positions, the device comprising:
a spout assembly comprising:
   a brew basket for holding an extractable material to be extracted to provide a liquid extract; and
   a spout in liquid communication with the brew basket for dispensing the extract of the extractable material from the brew basket, the spout having at least two dispersing positions,
wherein the spout is slidably associated with the brew basket so that the spout can travel between the at least two dispensing positions,
wherein the spout comprises an arm and the brew basket further comprises an outlet, the arm being slidably associated with the outlet of the brew basket when operably associated.

In another aspect, embodiments of the present invention relate to a spout assembly comprising:
a brew basket, for holding an extractable material to be extracted to provide a liquid extract; and
a spout in liquid communication with the brew basket for dispensing the extract of the extractable material from the brew basket, the spout having at least two dispensing positions,
wherein the spout is slidable relative to the brew basket so that the spout can travel between the at least two dispensing positions,
wherein the spout comprises an arm and the brew basket further comprises an outlet, the arm being slidably associated with the outlet of the brew basket when operably associated.

### BRIEF DESCRIPTION OF THE DRAWINGS

FIG. 1 is a schematic perspective view of one embodiment of a beverage brewing device In accordance with the present invention.
FIG. 2 is a schematic perspective view of one embodiment of a spout assembly having a spout in a "tall" orientation in accordance with the present invention.
FIG. 3 is a schematic perspective view of one embodiment of a spout assembly having a spout in a "short" orientation in accordance with the present invention.
FIG. 4 is a schematic perspective view of one embodiment of a brew basked with the spout removed in accordance with the present invention.
FIG. 5 is a schematic perspective view of one embodiment of a spout removed from the brew basket in accordance with the present invention.
FIG. 6 is a schematic back view of one embodiment of a spout in accordance with the present invention.
FIG. 7 is a top cross-sectional view of FIG. 3 along line A-A.
FIG. 7A is an enlarged view of a portion of FIG. 7.
FIG. 8 is a schematic back view of an alternate embodiment of a spout in accordance with the present invention.
FIG. 9 is a schematic perspective view of an alternate embodiment of a brew basket in accordance with the present invention.
FIG. 10 is a schematic perspective view of an alternate embodiment of a front side of a spout in accordance with the present invention.

### DETAILED DESCRIPTION OF THE INVENTION

### A. Definitions

As used herein, the term "beverage brewing device" means a conventional, multi-cup brewing device or a single-cup brewing device, having a moveable spout.

As used herein, the term "comprising" means various components can be cojointly employed in the methods and articles of this invention. Accordingly, the terns "consisting essentially of" and "consisting of" are embodied in the term comprising.

As used herein, the term "extractable material" means any solid, liquid, powder or concentrate that may be extracted, dissolved or diluted to produce a consumable liquid. In one embodiment, the "extractable material" may be an "extractable beverage material," which includes, but is not limited to, coffee (including, but not limited to, roast and ground, latte, cappuccino and espresso), tea, cocoa, dairy-based materials and/or fruit-based/flavored materials.

As used herein, the term "extracted" or "extract" may not only mean to treat with a solvent so as to remove a soluble substance, but also may include dissolving or diluting extractable materials as defined herein.

As used herein, the term "liquid extract" means a consumable liquid derived from any solid, liquid, powdered or concentrated extractable material, as defined herein.

As used herein, the term "static friction" means the force resulting from the interlocking of the irregularities of two surfaces that helps to prevent any relative motion between the two surfaces up to some limit where motion occurs. In other words, "static friction" is the force that must be overcome in order to move at least one of two bodies that are resting on each other.

### B. Beverage Brewing Device

Embodiments of the present invention relate to beverage brewing devices that improve the ease and convenience of use by providing consumers with the ability to selectively position a movable spout to accommodate various mug sizes, as well as remove the spout for cleaning.

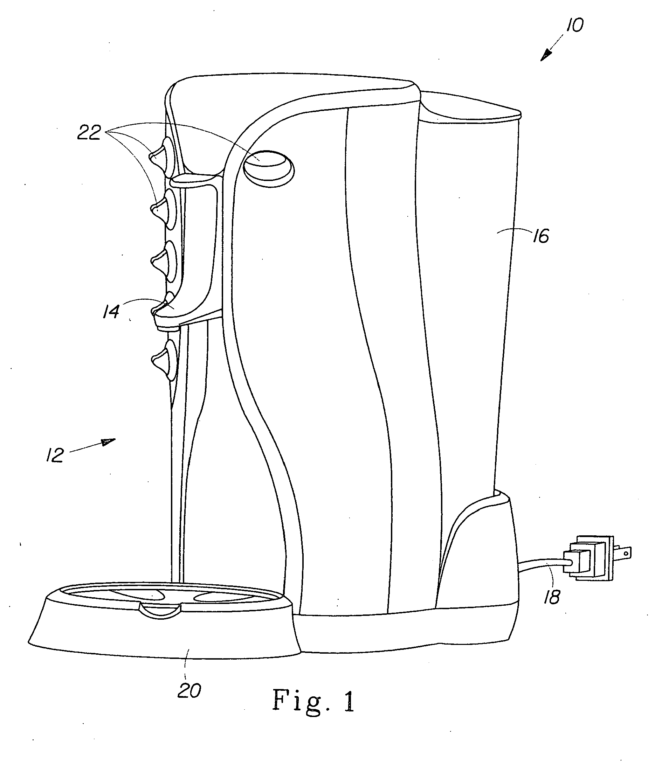

Referring to the drawings wherein like numerals relate to similar features throughout the drawings, FIG. 1 illustrates an exemplary beverage brewing device 10, generally comprising a brewing unit 12 having a spout 14. Brewing unit 12 may further comprise a reservoir 16, a power cable 18, an optional drip tray 20, one or more operation buttons 22, as well as a brew basket and lights (not shown). Beverage brewing device 10 may be a conventional, multi-cup brewing device, or, as illustrated in the exemplary drawings, may comprise a single-cup brewing device. While the following description will focus on coffee and coffee beverages, and a single-cup brewing device, it will be understood that such references are for illustration purposes only and the description should not be limited to such beverages or devices.

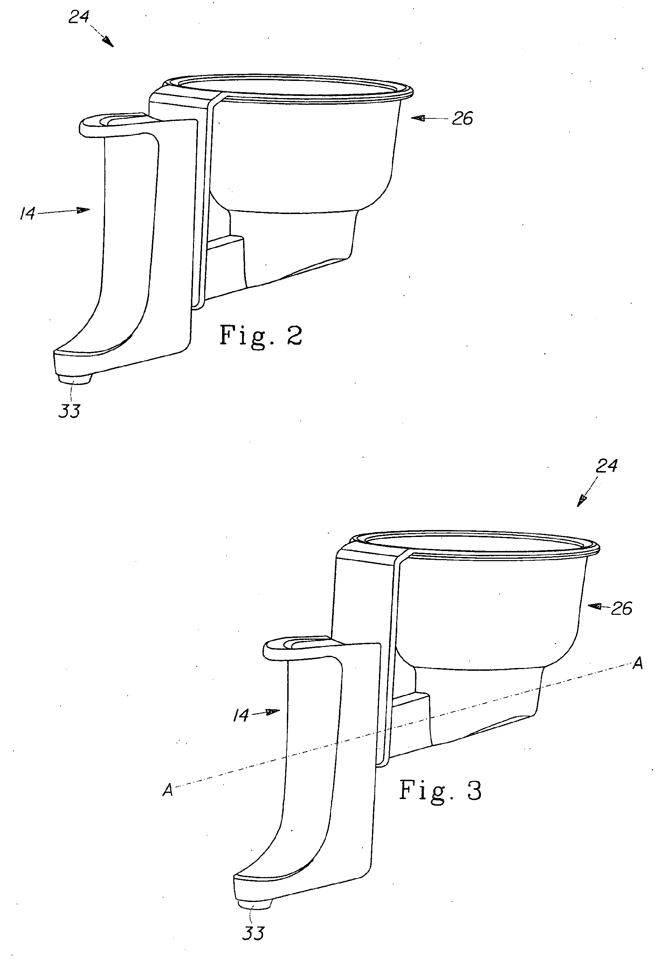

FIG. 2 illustrates an exemplary spout assembly 24 having a spout 14 capable of multiple dispensing positions to allow a consumer to fill a variety of differently sized cups. It will be understood by those skilled in the art that spout assembly 24 may be designed to be received within the brewing device, and more specifically, within the brewing unit, illustrated in FIG. 1, such that when operably associated with the brewing unit, spout assembly 24 may operate as described herein below.

Referring to FIGS. 2 and 3, spout assembly 24 may generally comprise a brew basket 26 for holding an extractable material (not shown) to be extracted to provide a liquid extract, and spout 14 for dispensing an extract of the extractable material contained by brew basket 26 through a dispensing orifice 33. In one embodiment, the extractable material may be an extractable beverage material, such as, but not limited to, coffee (including, but not limited to, roast and ground, latte, cappuccino and espresso), tea, cocoa, dairy-based materials and/or fruit-based/flavored materials. The extractable material may be contained within a filter pod or cartridge and placed in a pod holder (not shown) or other like assembly prior to placement into brew basket 26.

Spout 14 may be moveably associated with brew basket 26 and have at least two dispensing positions. As discussed herein, spout 14 may move vertically between two or more dispensing positions as a result of slidable engagement with brew basket 26. More specifically, spout 14 may be positioned in a "tall" orientation, such as that illustrated in FIG. 2, to dispense a beverage into a tall cup, or in a "short" orientation, such as that illustrated in FIG. 3, to dispense a beverage into a short cup. Of course, as discussed herein, spout 14 of spout assembly 24 may be configured for orientation into a plurality of dispensing positions to conveniently accommodate a plurality of cup sizes

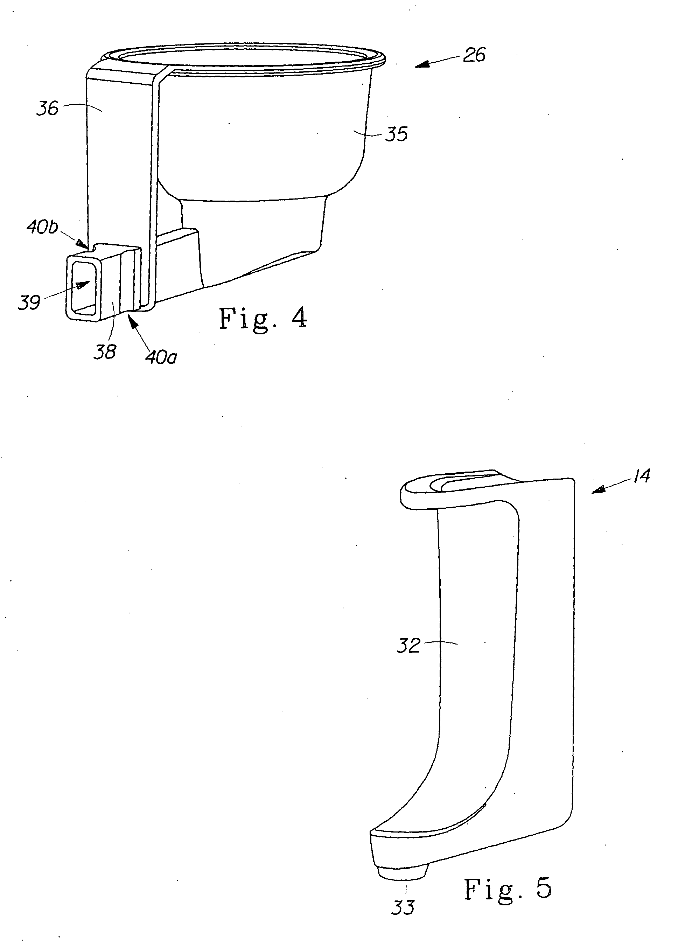

FIGS. 4-6 illustrate spout 14 and brew basket 26, both of the spout assembly, as well as exemplary components for association there between. Referring to FIG. 4, an exemplary brew basket 26 with the spout removed therefrom is illustrated. Brew basket 26 may have a container 35, a front vertical face 36 and an outlet 38 having an opening 39 that may extend from, and be in liquid communication with, container 35. Outlet 38 may include at least one engaging member to engage spout 14. As illustrated in the exemplary embodiment, outlet 38 may include two engaging members 40a and 40b. As discussed later herein, engaging members 40a and 40b may be configured for slideable engagement of spout 14. Additionally, the bottom of container 35 may be slanted in a downward direction to facilitate liquid communication from brew basket 26 to spout 14, whether by gravity or applied pressure. It will be understood by those skilled in the art that brew basket 26 may optionally be an integral part of the brewing unit rather than removably attached thereto.

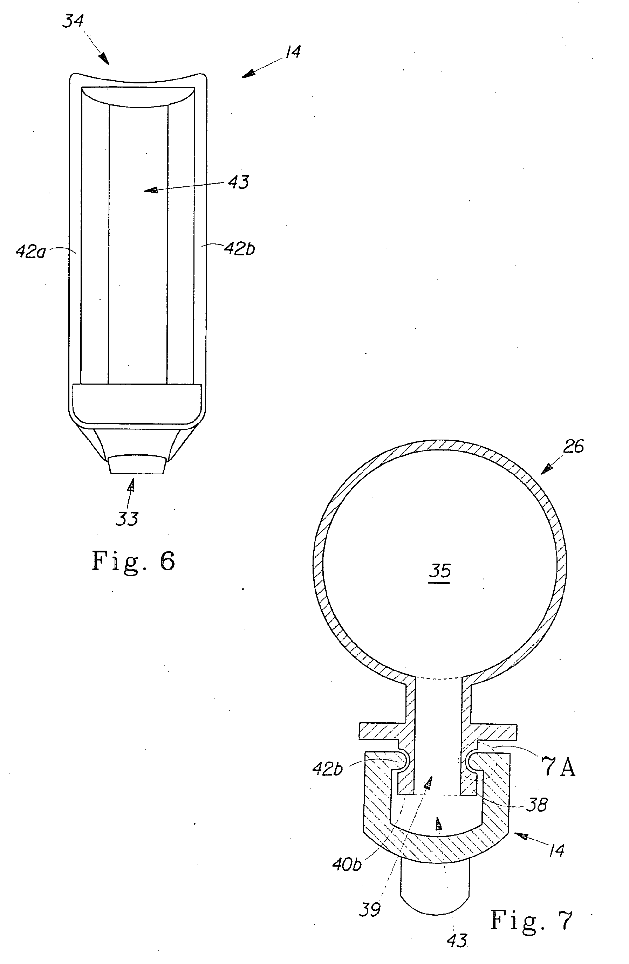

FIG. 5 illustrates one embodiment of spout 14 having a front side 32, as well as dispensing orifice 33. Front side 32 may optionally comprise a reverse C-shape to accommodate attachment of spout 14 to brew basket 26 while allowing dispensing orifice 33 to outwardly protrude from the spout assembly, and ultimately, from the brewing device, to accommodate cups of various heights. It will be understood by those skilled in the art that spout 14 may be of any configuration that permits attachment of spout 14 to brew basket 26, while allowing dispensing orifice 33 to protrude outwardly from the brewing device. As shown in FIG. 6, a backside 34 of spout 14 may comprise arms 42a and 42b that may be vertically movable relative to the outlet when operably associated. More specifically, when operably connected, arms 42a and 42b of spout 14 may be received by, and slidably associated with, engaging members 40a and 40b of outlet 38 of brew basket 26 with sufficient gripping force to hold spout 14 in place yet still permitting vertical sliding of spout 14 along front vertical face 36 of brew basket 26 to a desired dispensing position (as shown in FIGS. 2 and 3) both before and during operation. To connect spout 14 to brew basket 26, arm 42b may be aligned in engaging member 40b and force applied to move arm 42a into engaging member 40a (e.g. a "snap-fit" connection). To remove spout 14 from brew basket 26 for cleaning, one simply needs to pull spout 14 outwardly.

Also illustrated in FIG. 6, backside 34 of spout 14 may comprise a channel 43 extending along a substantial length of backside 34. Channel 43 may be configured to receive and engage outlet 38 of brew basket 26 so as to maintain liquid communication between outlet 38 and backside 34 of spout 14, through channel 43, and through dispensing orifice 33.

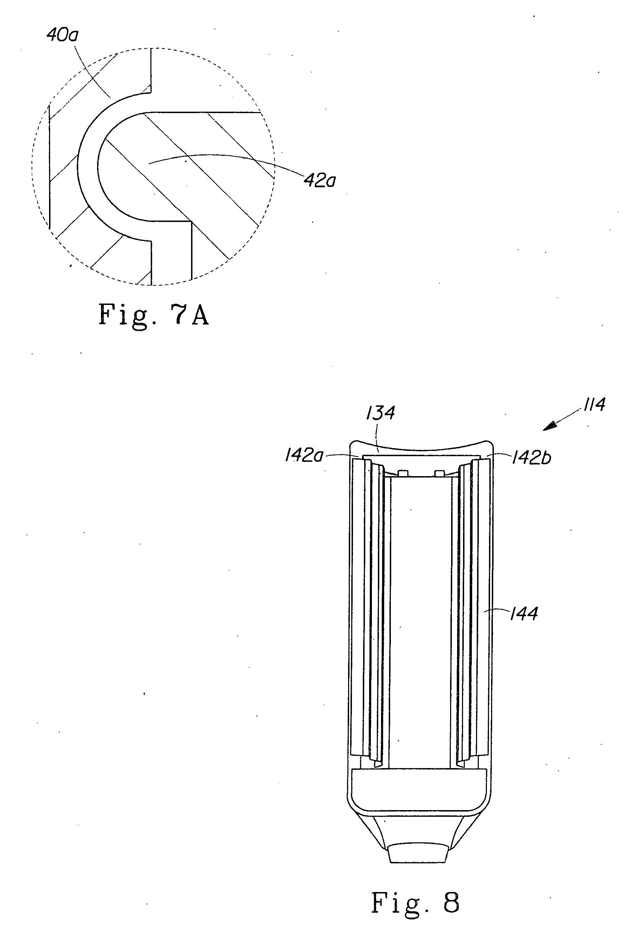

FIG. 7 is a top cross-sectional view along A-A of FIG. 3 and generally illustrates the slidable engagement of spout 14 with brew basket 26, as well as the path of liquid communication between outlet 38 of brew basket 26 and channel 43 of spout 14. More particularly, arms 42a and 42b of spout 14 may be received by engaging members 40a and 40b of outlet 38 so as to permit vertical movement of spout 14 to a plurality of dispensing positions. In addition, in use, the extract of the extractable material passes from container 35 through opening 39 of outlet 38 into channel 43 and ultimately, out of the brewing device via the dispensing orifice.

It should be understood that other arrangements for providing a spout having at least two dispensing positions are acceptable for use herein.

To maintain the desired dispensing position of spout 14 in relation to brew basket 26, spout 14 may be constructed of a material such that the overall weight of spout 14 is not sufficient to overcome the static friction between arms 42a and 42b of spout 14 and engaging members 40a and 40b of outlet 38, thereby permitting spout 14 to remain in the desired dispensing position. Materials acceptable for use in constructing spout 14 may include any common materials known in the art, such as, for example, plastic, metals and the like.

In an alternate embodiment shown in FIG. 8, a clip 144 may be mounted within back side 134 of spout 114 and received by the engaging members of the outlet of the brew basket to reinforce the association between spout 114 and the brew basket, as described previously. Those skilled in the art will understand that, in addition to clip 144, any assembly capable of strengthening the association between spout 114 and the brew basket, while simultaneously accommodating vertical movement of spout 114 relative to the brew basket, is acceptable for use herein. Similar to the spout, clip 144, or other like assembly, may be constructed of a material such that the overall weight of spout 114 and clip 144 together is not sufficient to overcome the static friction between arms 142a and 142b of spout 114 and the engaging members of the brew basket.

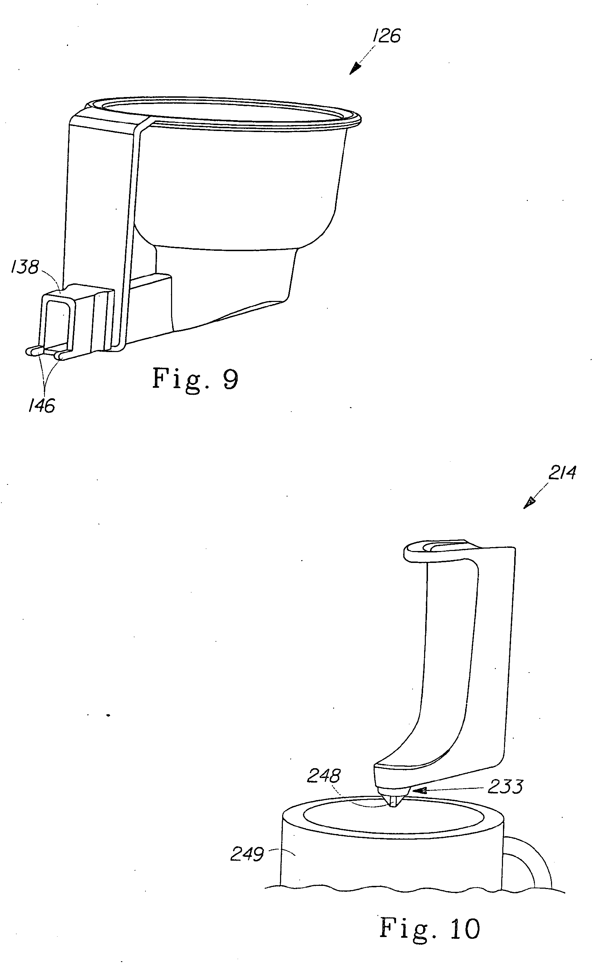

As illustrated in FIG. 9, if desired, outlet 138 of brew basket 126 may further comprise a plurality of guides 146, extending substantially horizontally from outlet 138, such that when brew basket 126 is operably associated with the spout, guides 146 span the channel and contact the back side, or clip if present, of the spout thereby further directing the flow of coffee from brew basket 126, between guides 146 and through the spout.

Moreover, as illustrated in FIG. 10, dispensing orifice 233 of spout 214 may further comprise a liquid director 248. Liquid director 248 may be of any design that operates to further direct the extracted coffee into a cup 249 by providing for a more defined flow pattern and reduced splattering. More specifically, in use, the coffee, even during full flow in the brewing process, may coalesce at liquid director 248 due to surface tension thereby improving control over the outflowing stream of coffee and reducing splattering without reducing the flow rate. Moreover, liquid director 248 may improve final drip control by helping to ensure the final drips of coffee dispensed at the end of the brewing cycle are directed to the drip tray (not shown).

One skilled in the art will understand that the features described in the foregoing alternate embodiments may be included separately, or may be combined, in a brewing device in accordance with the present invention.

In use, beverage brewing devices in accordance with the foregoing description generally operate as follows. A consumer plugs the power cable into an electricity source to supply electricity to the brewing device. Next, the consumer places a pod or pouch of extractable beverage material into the brew basket of the brewing unit and chooses a dispensing position for the spout depending on cup height. The consumer then makes a beverage election using the operation buttons, which initiates the brew cycle causing liquid to be drawn From the reservoir into a heater inside the brewing unit. As the liquid is heated, it is pumped through the brewing unit and is dispensed, generally under pressure, onto the pod containing the extractable material. As the liquid passes through the pod, the resulting extract travels from the container of the brew basket, through the opening of the outlet of the brew basket, into the channel of the spout and, ultimately exits the brewing device via the dispensing orifice of the spout where it can be collected in the consumer's cup.

It will be understood that embodiment of the brewing devices described herein may comprise additional components common to many conventional brewing devices but not shown in the present illustrations, including, but not limited to, internal components such as a heater, pump and control system, as well as further optional components, such as a brew basket, pod holder (when applicable) and closing mechanism. Furthermore, embodiments of brewing device, as wall as components thereof described herein, may be constructed of a variety of materials, including, but not limited to, plastic, steel, aluminum, titanium, glass, ceramic, and the like. Those skilled in the art will understand how to select the optimum material for constructing the various components based on each component's function.

## Claims

1. A beverage brewing device (10) comprising at least two dispensing positions, the device comprising:
a spout assembly (24) comprising;
- a brew basket (26) for holding an extractable material to be extracted to provide a liquid extract; and
- a spout (14) in liquid communication with the brew basket (26) for dispensing the extract or the extractable material from the brew basket (26), the apout (14) having at least two dispensing positions,
wherein the spout (14) is slidably associated with the brew basket (26) so that the spout (14) can travel between the at least two dispensing positions, **characterised in that** the spout (14) comprises an arm (42) and the brew basket (26) further comprises an outlet (38), the arm (42) being slideably associated with the outlet (38) of the brew basket (26) when operable associated.

2. The beverage brewing device of Claim 1 wherein the spout (14) is vertically moveable in relation to the brewing device (10) when the spout assembly (24) is movably associated with the brewing device (10).

3. The beverage brewing device (10) of Claim 1 wherein the spout (14) is removably associated with the brew basket (26).

4. The beverage brewing device (10) of Claim Wherein the brewing device (10) is a single-cup brewing devices.

5. The beverage brewing device (10) of Claim 1 wherein the arm (42) is vertically movable relative to the outlet (38) when operably associated.

6. The beverage brewing device (10) of Claim 1 wherein the brew basket (26) comprises a plurality of guides (146) to direct flow of the extract from the brew basket (26) into the spout (14).

7. The beverage brewing device (10) of Claim 1 wherein the spout (14) comprises a liquid director (248) for directing flow of the extract from the brewing device (10) into a cup.

8. A spout assembly (24) comprising:
- a brew basket (26) for holding an extractable material to be extracted to provide a liquid extract; and
- a spout (14) in liquid communication with the brew basket (26) for dispensing the extract of the extractable material from the brew basket (26), the spout (14) having at least two dispensing positions,
wherein the spout (14) is slidable relative to the brew basket (26) so that the spout (14) can travel between the at least two dispensing positions, **characterised in that** the spout (14) comprises an arm (42) and the brew basket (26) further comprises an outlet (38), the arm (42) being slidably associated with the outlet (38) of the brew basket (26) when operably associated.

9. The spout assembly (24) of Claim 8 wherein the spout (14) is vertically moveable relative to the brew basket (26).

10. The spout assembly (24) of Claim 8 wherein the brew basket (26) further comprises a plurality of guides (146) to direct flow of the extract from the brew basket (26) into the spout (14).

11. The spout assembly (24) of Claim 8 wherein the spout (14) is removably associated with the brew basket (26).

12. The spout assembly (24) of Claim 8 wherein the spout (14) comprises a liquid director (248) for directing flow of the extract from the spout (14) into a receptacle.

13. The spout assembly (24) of Claim 8 wherein the spout assembly (24) is operably associable with a beverage brewing device (10).

## Patentansprüche

1. Getränkebrühvorrichtung (10), umfassend mindestens zwei Abgabepositionen, wobei die Vorrichtung Folgendes umfasst:
eine Tülleneinheit (24), umfassend:
- ein Brühsieb (26) zum Halten eines extrahierbaren Materials, das extrahiert werden soll, um einen flüssigen Extrakt bereitzustellen; und
- eine Tülle (14), die in Flüssigkeitsverbindung mit dem Brühsieb (26) ist, für die Abgabe des Extrakts des extrahierbaren Materials aus dem Brühsieb (26), wobei die Tülle (14) mindestens zwei Abgabepositionen aufweist,
wobei die Tülle (14) gleitfähig mit dem Brühsieb (26) verbunden ist, so dass die Tülle (14) zwischen den mindestens zwei Abgabepositionen wandern kann, **dadurch gekennzeichnet, dass** die Tülle (14) einen Arm (42) umfasst und das Brühsieb (26) ferner einen Auslass (38) umfasst, wobei der Arm (42) gleitfähig mit dem Auslass (38) des Brühsiebs (26) verbunden ist, wenn sie betriebsfähig verbunden sind.

2. Getränkebrühvorrichtung nach Anspruch 1, wobei die Tülle (14) vertikal im Bezug auf die Brühvorrichtung (10) beweglich ist, wenn die Tülleneinheit (24) beweglich mit der Brühvorrichtung (10) verbunden ist.

3. Getränkebrühvorrichtung (10) nach Anspruch 1, wobei die Tülle (14) abnehmbar mit dem Brühsieb (26) verbunden ist.

4. Getränkebrühvorrichtung (10) nach Anspruch 1, wobei die Brühvorrichtung (10) eine Einzeltassenbrühvorrichtung ist.

5. Getränkebrühvorrichtung (10) nach Anspruch 1, wobei der Arm (42) vertikal relativ zu dem Auslass (38) beweglich ist, wenn sie betriebsfähig verbunden sind.

6. Getränkebrühvorrichtung (10) nach Anspruch 1, wobei das Brühsieb (26) eine Vielzahl von Führungen (146) umfasst, um den Fluss des Extrakts aus dem Brühsieb (26) in die Tülle (14) zu lenken.

7. Getränkebrühvorrichtung (10) nach Anspruch 1, wobei die Tülle (14) einen Flüssigkeitsleiter (248) umfasst, um den Fluss des Extrakts aus der Brühvorrichtung (10) in eine Tasse zu lenken.

8. Tülleneinheit (24), umfassend:
- ein Brühsieb (26) zum Halten eines extrahierbaren Materials, das extrahiert werden soll, um einen flüssigen Extrakt bereitzustellen; und
- eine Tülle (14), die in Flüssigkeitsverbindung mit dem Brühsieb (26) ist, für die Abgabe des Extrakts des extrahierbaren Materials aus dem Brühsieb (26), wobei die Tülle (14) mindestens zwei Abgabepositionen aufweist,
wobei die Tülle (14) relativ zu dem Brühsieb (26) gleitfähig ist, so dass die Tülle (14) zwischen den mindestens zwei Abgabepositionen wandern kann, **dadurch gekennzeichnet, dass** die Tülle (14) einen Arm (42) umfasst und das Brühsieb (26) ferner einen Auslass (3 8) umfasst, wobei der Arm (42) gleitfähig mit dem Auslass (38) des Brühsiebs (26) verbunden ist, wenn sie betriebsfähig verbunden sind.

9. Tülleneinheit (24) nach Anspruch 8, wobei die Tülle (14) vertikal relativ zu dem Brühsieb (26) beweglich ist.

10. Tülleneinheit (24) nach Anspruch 8, wobei das Brühsieb (26) ferner eine Vielzahl von Führungen (146) umfasst, um den Fluss des Extrakts aus dem Brühsieb (26) in die Tülle (14) zu lenken.

11. Tülleneinheit (24) nach Anspruch 8, wobei die Tülle (14) abnehmbar mit dem Brühsieb (26) verbunden ist.

12. Tülleneinheit (24) nach Anspruch 8, wobei die Tülle (14) einen Flüssigkeitsleiter (248) umfasst, um den Fluss des Extrakts aus der Tülle (14) in einen Behälter zu lenken.

13. Tülleneinheit (24) nach Anspruch 8, wobei die Tülleneinheit (24) betriebsfähig mit dem Getränkebrühvorrichtung (10) verbunden werden kann.

## Revendications

1. Dispositif de brassage de boisson (10) comprenant au moins deux positions de dispensation, le dispositif comprenant :
un assemblage de bec (24) comprenant :
- un panier de brassage (26) pour contenir un matériau extractible destiné à être extrait pour fournir un extrait liquide ; et
- un bec (14) en communication du point de vue des liquides avec le panier de brassage (26) pour dispenser l'extrait du matériau extractible à partir du panier de brassage (26), le bec (14) ayant au moins deux positions de dispensation,
dans lequel le bec (14) est associé d'une manière coulissante au panier de brassage (26) de sorte que le bec (14) peut se déplacer entre les au moins deux positions de dispensation, **caractérisé en ce que** le bec (14) comprend un bras (42) et le panier de brassage (26) comprend en outre une sortie (38), le bras (42) étant associé d'une manière coulissante à la sortie (38) du panier de brassage (26) lorsqu'il est associé de manière fonctionnelle.

2. Dispositif de brassage de boisson selon la revendication 1, dans lequel le bec (14) est mobile verticalement par rapport au dispositif de brassage (10) lorsque l'assemblage de bec (24) est associé de manière mobile au dispositif de brassage (10).

3. Dispositif de brassage de boisson (10) selon la revendication 1, dans lequel le bec (14) est associé de façon amovible au panier de brassage (26).

4. Dispositif de brassage de boisson (10) selon la revendication 1, où le dispositif de brassage (10) est un dispositif de brassage à une seule tasse.

5. Dispositif de brassage de boisson (10) selon la revendication 1, dans lequel le bras (42) est mobile verticalement par rapport à la sortie (38) lorsqu'il est associé de manière fonctionnelle.

6. Dispositif de brassage de boisson (10) selon la revendication 1, dans lequel le panier de brassage (26) comprend une pluralité de guides (146) pour diriger l'écoulement de l'extrait du panier de brassage (26) dans le bec (14).

7. Dispositif de brassage de boisson (10) selon la revendication 1, dans lequel le bec (14) comprend un guide de liquide (248) pour diriger l'écoulement de l'extrait du dispositif de brassage (10) dans une tasse.

8. Assemblage de bec (24) comprenant :
- un panier de brassage (26) pour contenir un matériau extractible destiné à être extrait pour fournir un extrait liquide ; et
- un bec (14) en communication du point de vue des liquides avec le panier de brassage (26) pour dispenser l'extrait du matériau extractible à partir du panier de brassage (26), le bec (14) ayant au moins deux positions de dispensation,
dans lequel le bec (14) est coulissant par rapport au panier de brassage (26) de sorte que le bec (14) peut se déplacer entre les au moins deux positions de dispensation, **caractérisé en ce que** le bec (14) comprend un bras (42) et le panier de brassage (26) comprend en outre une sortie (38), le bras (42) étant associé d'une manière coulissante à la sortie (38) du panier de brassage (26) lorsqu'il est associé de manière fonctionnelle.

9. Assemblage de bec (24) selon la revendication 8, dans lequel le bec (14) est mobile verticalement par rapport au panier de brassage (26).

10. Assemblage de bec (24) selon la revendication 8, dans lequel le panier de brassage (26) comprend en outre une pluralité de guides (146) pour diriger l'écoulement de l'extrait du panier de brassage (26) dans le bec (14).

11. Assemblage de bec (24) selon la revendication 8, dans lequel le bec (14) est associé de façon amovible au panier de brassage (26).

12. Assemblage de bec (24) selon la revendication 8, dans lequel le bec (14) comprend un guide de liquide (248) pour diriger l'écoulement de l'extrait du bec (14) dans un récipient.

13. Assemblage de bec (24) selon la revendication 8, où l'assemblage de bec (24) peut être associé de manière fonctionnelle à un dispositif de brassage de boisson (10).
